# FASCICULE DE BREVET EUROPEEN

(11) **EP 1 013 118 B1**
(45) Date de publication et mention de la délivrance du brevet: **23.10.2002**
(21) Numéro de dépôt: 98941410.7
(22) Date de dépôt: 10.08.1998
(51) Int. Cl.: H04Q 7/32

(54) **PROCEDE ET DISPOSITIF DE COMMANDE D'UNE UNITE DE TELEPHONIE MISE EN PLACE DANS UN VEHICULE AUTOMOBILE**
VERFAHREN UND VORRICHTUNG ZUR STEUERUNG EINES IN EINEM FAHRZEUG INSTALLIERTEN TELEFONS
METHOD AND DEVICE FOR CONTROLLING A TELEPHONE SYSTEM UNIT SET UP IN A MOTOR VEHICLE

(30) Priorité: 10.09.1997 FR 9711235
(43) Date de publication de la demande: 28.06.2000
(73) Titulaire: Siemens VDO Automotive S.A.S., 31036 Toulouse cedex 01 (FR)
(72) Inventeur: COUR, Maurice, F-31810 Clermont Le Fort (FR); DUBOIS, Caroline, F-35510 Cesson Sévigné (FR)
(74) Mandataire: Berg, Peter
(86) Numéro de dépôt international: EP9805072
(87) Numéro de publication internationale: WO99013668

(56) Documents cités:
- EP-A- 0 510 809
- EP-A- 0 613 314
- DE-A- 3 333 587
- PATENT ABSTRACTS OF JAPAN vol. 012, no. 362 (E-663), 28 septembre 1988 & JP 63 115440 A (NISSAN MOTOR CO LTD), 20 mai 1988

## Description

La présente invention est relative à un procédé et à un dispositif de commande d'une unité de téléphonie mise en place dans un véhicule automobile. Plus particulièrement, il s'agit d'améliorer la sécurité d'utilisation des téléphones de voiture.

De plus en plus de téléphones portables sont utilisés dans les véhicules automobiles. A cet effet, un support fixe restant à demeure dans le véhicule est placé à l'intérieur de l'habitacle. Ce support est destiné à recevoir une unité amovible dans un logement prévu à cet effet. Une telle unité amovible est, par exemple, constituée par un combiné portable classique ou encore par une simple carte électronique identifiant un abonné d'un réseau téléphonique (carte « SIM »).

Ces téléphones de voiture ont été associés, pour des raisons de sécurité de conduite, à des dispositifs dits « mains libres ». De tels dispositifs « mains libres » permettent notamment de pouvoir prendre un appel téléphonique sans avoir à tenir contre son oreille et à portée de voix, un appareil téléphonique. De manière courante, les dispositifs « mains libres » connus comportent donc un micro et un haut-parleur implantés directement dans le véhicule à portée immédiate du conducteur, de telle sorte que le conducteur puisse entendre et répondre à un appelant, sans avoir à tenir en main un quelconque appareil téléphonique. Le but de tels dispositifs « mains libres » est de perturber le moins possible le conducteur de sa fonction prioritaire de conduite.

En effet, une étude «The new England Journal of Medicine », 13 Février 1997, vol 336, n°7, indique que les possesseurs de téléphone de voiture voient leurs risques d'avoir un accident multiplié par 4.

Des études statistiques réalisées sur ce sujet « Courrier International Août 1996, n°304 » montrent que 42% des accidents imputés à l'utilisation d'un téléphone de voiture se passent pendant la phase de prise de ligne. Une autre proportion importante des accidents (31%) se passe pendant la phase de composition du numéro.

Une autre étude publiée en 1996 par l'INRETS-LESCO, et concernant « l'impact de l'utilisation du téléphone de voiture sur la sécurité routière » mentionne que, en ville, 25% des personnes expérimentées (en conduite et en téléphonie), et 50% sur autoroute, décrochent leur téléphone, dans leur véhicule en déplacement, moins de deux secondes après le début de la première sonnerie.

La présente invention vise à réduire les causes d'accidents imputables à l'utilisation de téléphone dans un véhicule automobile.

A cet effet, il est déjà connu de la demande EP-A-0 613 314 un téléphone cellulaire repliable mis en place dans un véhicule automobile. Lorsqu'un appel est reçu sur ce téléphone alors qu'il est en position repliée, le simple fait que le conducteur le déploie émet un message vers l'appelant du type «Restez en ligne, l'appelé conduit un véhicule». Mais dans ce cas, le conducteur doit effectuer une manoeuvre complexe (le déploiement du téléphone) pour que l'appel d'attente soit transmis. En outre, si le téléphone est déployé, aucun message d'attente n'est émis. Ce téléphone ne permet pas d'éviter une prise de ligne trop rapide du conducteur. Au contraire, pour que le message d'attente soit émis, il nécessite une manoeuvre immédiate de la part du conducteur. Cela va à l'encontre d'une prise de ligne sécurisée.

Le document EP 0 510 809 (TECHNOPHONE) décrit, quant à lui, un radio téléphone équipé de moyens de prise de ligne automatique lorsque le moteur du véhicule tourne. Cette prise de ligne automatique immédiate est dangereuse et va à l'encontre de l'objet de la présente invention qui est d'éviter que le conducteur ne prenne trop rapidement une communication (sans attendre d'être dans des conditions optimales pour y répondre). Ici, bien que le conducteur n'ait aucune manoeuvre à réaliser pour effectuer la prise de ligne, le conducteur n'est pas maître de l'instant de cette prise de ligne, ce qui demeure préjudiciable à la sécurité.

Le document JP A 63 115 440 (NISSAN) décrit un système téléphonique pour véhicule automobile. Selon ce document lorsque le téléphone présent dans le véhicule reçoit un appel, la sonnerie est activée pendant un temps programmable, puis en l'absence de réponse du conducteur, la ligne téléphonique est automatiquement prise. La sonnerie est alors arrêtée et est remplacée par une lumière clignotante. Le conducteur arrête alors son véhicule, puis réponds à l'appel. La mise en condition sécuritaire (dans ce cas -arrêt complet du véhicule-) n'est effectuée qu'après une temporisation. Si cette mise en condition sécuritaire est souhaitée dés la réception de l'appel téléphonique, le conducteur doit programmer la temporisation a une valeur nulle. Ceci implique une manipulation volontaire de la part du conducteur, avec les risques d'erreur inhérents à ce type d'intervention. La présente invention cherche à éviter toute implication du conducteur dans la mise en oeuvre de la mise en condition sécuritaire.

Pour éviter une prise de ligne trop rapide (et hors sécurité) de la part du conducteur, aucun de ces documents, seul ou en combinaison, n'apporte de solution satisfaisante.

La présente invention a pour but d'éviter une prise de ligne téléphonique trop rapide et notamment cherche à isoler le conducteur du monde extérieur tant que les conditions optimales de prise de ligne ne sont pas atteintes. A cet effet, la présente invention propose un procédé de commande d'une unité de téléphonie mise en place dans un véhicule automobile, le dit procédé étant caractérisé en ce que lorsque le véhicule est activé et qu'un appel téléphonique est reçu par l'unité de téléphonie en provenance d'un appelant :
- on effectue automatiquement une mise en condition sécuritaire du conducteur appelé, et
- on autorise la prise de ligne par le conducteur, uniquement si la mise en condition sécuritaire est achevée.

De préférence, le procédé selon l'invention comporte également une étape dans laquelle :
- on émet un message d'attente informant l'appelant que l'appelé se trouve dans un véhicule actif.

Ainsi, le procédé selon l'invention effectue une mise en condition de sécurité du conducteur avant d'autoriser la prise de ligne par celui-ci.

La mise en condition sécuritaire du conducteur consiste à informer le conducteur, de la manière la plus douce et la moins intrusive possible, qu'un appel a été reçu. A cet égard, aucune sonnerie stridente de téléphone n'est répercutée à l'intérieur de l'habitacle du véhicule. Au contraire, on diminue cette sonnerie ou on la supprime et on la remplace par un témoin lumineux (une lampe clignotant lentement), et/ou un message sonore rappelant au conducteur que l'appel reçu peut attendre qu'il soit dans des conditions de conduites optimales pour y répondre. En outre, on réduit le volume sonore des accessoires audio (autoradio, C.D...) en marche dans le véhicule. On amène ainsi le conducteur doucement dans des conditions optimales de prise d'appel. C'est uniquement lorsque la mise en condition sécuritaire est achevée que le conducteur est autorisé à prendre l'appel. Cette autorisation de prise de ligne peut être matérialisée, à la demande, par un léger bip sonore, par exemple ou tout moyen non intrusif analogue ou bien coïncider avec la fin d'un message d'information émis vers le conducteur.

De préférence, selon l'invention, l'appelant est informé qu'il est en communication avec un appelé conduisant un véhicule automobile. L'appelant est ainsi à même de comprendre que l'appelé n'est pas dans une situation optimale pour répondre rapidement à l'appel.

De son côté, à réception d'un appel, l'appelé sait qu'il n'y a aucune urgence à le prendre immédiatement puisque la prise d'appel ne sera accordée que lorsque, l'ensemble des conditions de mise en sécurité du conducteur, seront achevées.

La présente invention permet donc d'informer l'appelant que l'appelé est le conducteur d'un véhicule en déplacement et de différer la prise de ligne par l'appelé en toute quiétude et sécurité. On évite ainsi que l'appelé prenne trop rapidement la ligne (notamment parce que l'appelé ne veut pas perdre un appel) et engendre inévitablement une augmentation des risques d'accidents.

Avantageusement, le procédé, selon l'invention, n'est mis en oeuvre dans un véhicule que lorsque celui-ci est actif. Un véhicule est considéré comme actif lorsqu'il se déplace (ce qui peut être détecté par des capteurs de rotation de roues), lorsqu'il est à l'arrêt moteur tournant (capteur d'arbre à came), lorsqu'il est à l'arrêt moteur arrêté mais (+) après contact en fonctionnement. Un véhicule est considéré comme inactif lorsque le moteur est arrêté et que le (+) après contact n'est pas activé. Lorsque le véhicule est inactif, les communications téléphoniques sont établies normalement. De ce fait, le procédé selon l'invention comporte une étape dans laquelle l'unité de téléphonie est informée sur l'état d'activation du moteur. C'est dans une telle étape que l'on utilise les informations données par le capteur de rotation des roues et/ou le capteur d'arbre à came et/ou l'activation du (+) après contact. Ces types de paramètres sont déjà utilisés dans le calculateur de commande électronique du véhicule et ne nécessitent donc pas l'implantation de capteur spécifique.

La présente invention concerne également un dispositif et une unité de téléphonie mettant en oeuvre un tel procédé de commande.

D'autres objets, caractéristiques et avantages de la présente invention ressortiront d'ailleurs de la description qui suit, à titre d'exemple non limitatif et en référence aux dessins annexés dans lesquels :
- la figure 1 est une vue schématique présentant un dispositif de commande selon l'invention, et
- les figures 2a à 2c représentent, de manière schématique, sur un diagramme des temps, la suite des étapes gérées par le procédé selon l'invention.

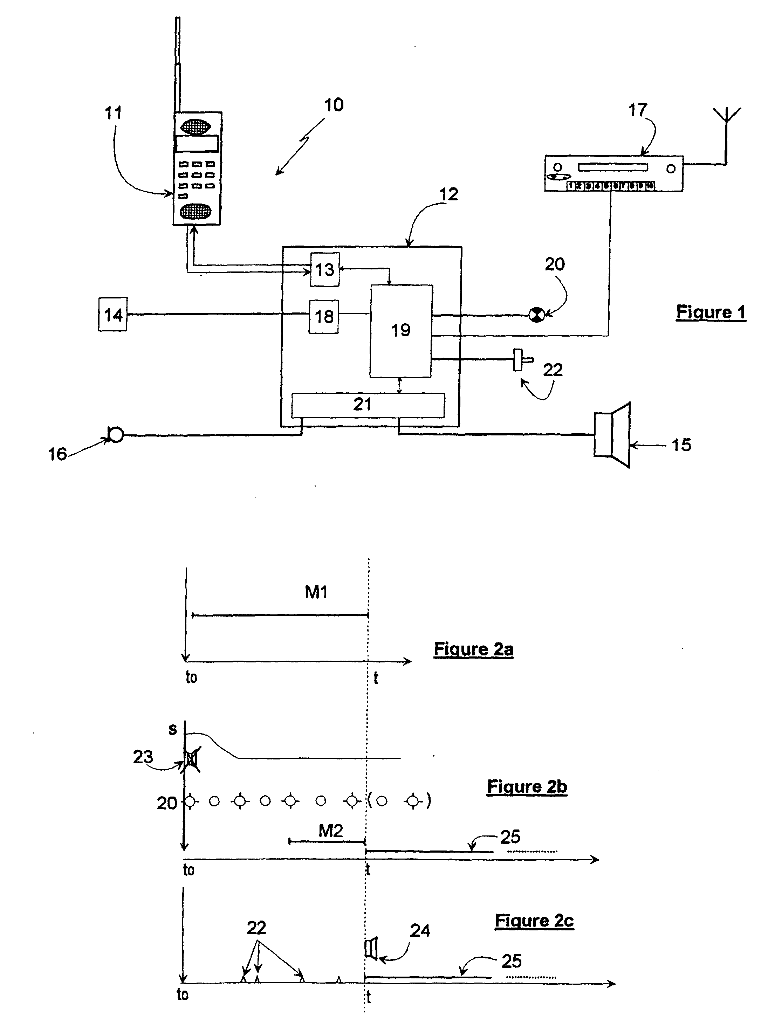

Le procédé selon l'invention permet de commander le fonctionnement d'une unité de téléphonie 10 (figure 1) constituée par une unité amovible 11 et un support fixe 12 disposé dans le véhicule automobile.

Bien entendu, en variante, l'unité de téléphonie peut également être un ensemble directement intégré à un accessoire du véhicule (auto-radio, CD, ...) ou intégré au véhicule lui-même. Dans ce cas, cette unité ne comporte pas d'élément amovible et est intégrée à demeure dans le véhicule. Cela ne change en rien la réalisation des étapes essentielles de la mise en condition sécuritaire du conducteur décrite ci-après.

Le cas échéant, des moyens 13 de détection de la coopération fonctionnelle de l'unité amovible 11 et du support 12 sont prévus. Dès qu'il y a coopération fonctionnelle de ces deux éléments 11 et 12, l'unité de téléphonie 10 est opérationnelle. Ces moyens de détection permettent également, le cas échéant, de renvoyer vers le réseau téléphonique tout message élaboré par une unité centrale de calcul 19. Cette unité centrale de calcul a pour rôle de gérer le séquencement de l'ensemble des communications téléphoniques reçues ou émises par l'unité de téléphonie.

Les moyens 13 de détection de la coopération fonctionnelle de l'unité amovible 11 et du support 12 sont par exemple constitués par un simple bouton de contact autorisant l'alimentation de l'unité de téléphonie uniquement lorsque celle-ci est correctement mise en place dans le support fixe. Ces moyens de détection 13 peuvent indifféremment être placés sur l'unité amovible ou sur le support fixe.

L'unité de téléphonie 10, ainsi constituée, reçoit par l'intermédiaire d'un moyen de traitement 18, une information sur l'état de l'activation du véhicule. Cette information est issue d'un capteur de vitesse de roue 14 et/ou d'un capteur d'arbre à came et/ou d'un capteur d'activation de la mise sur (+) après contact utilisés par un calculateur électronique de commande du fonctionnement moteur (non représenté) et connu en soi.

Ainsi, dès que l'unité de téléphonie est opérationnelle et qu'elle est informée de l'état d'activation du véhicule, la réception d'un appel (à un instant t0 (figure 2a)) est gérée de la manière ci-après décrite.

Le procédé de commande selon l'invention active dans l'unité centrale 19 des moyens de prise de ligne automatique. Une fois la liaison téléphonique établie, un message d'attente M1 est transmis vers l'appelant. Ce message d'attente l'informe du fait que l'appelé est le conducteur d'un véhicule automobile. Un tel message peut par exemple être le suivant :
- « Vous êtes en communication avec un véhicule automobile, merci de bien vouloir patienter ». Ce message se termine à l'instant t.

De manière simultanée à l'instant t0 (figure 2b), l'appelé (le conducteur) est informé de la réception d'un appel téléphonique. Les moyens d'information du conducteur sont des moyens non intrusifs de manière à ne pas perturber sa conduite. Ainsi, la sonnerie 23 du téléphone est soit amoindrie, soit supprimée. Dans tous les cas, le niveau sonore S des accessoires en fonctionnement dans l'habitacle du véhicule est diminué (autoradio 17, C.D., ...). Un témoin lumineux 20 (une lampe clignotant lentement) et / ou sonore M2 est activé. Un tel témoin sonore peut par exemple être constitué par un message d'information M2 prenant la forme suivante :
- « Appel en cours, merci de vous assurer que vous pouvez y répondre sans risque ».

Le message informant le conducteur doit être le plus court possible afin de ne pas monopoliser inutilement son attention. De préférence, la fin du message d'information du conducteur M2 coïncide avec la fin du message M1 de l'appelant.

Dès la fin du message M2 (instant t), la mise en condition sécuritaire du conducteur est achevée. Si nécessaire, un léger bip sonore 24 peut être émis à cet instant t. Cette matérialisation de la fin de mise en condition sécuritaire informe le conducteur qu'il peut prendre la ligne s'il le désire. Toute manoeuvre de l'organe de prise de ligne (bouton poussoir 22 figure 1) pendant la mise en condition sécuritaire n'est prise en compte qu'à l'achèvement de cette mise en condition, c'est-à-dire uniquement à l'instant t (figure 2c). Ainsi comme cela est représenté aux figures 2b et 2c, c'est à partir de cet instant t uniquement que la mise en communication 25 est établie et autorisée.

Une fois la mise en condition sécuritaire achevée (instant t), le conducteur peut prendre l'appel en informant l'unité de téléphonie de son acceptation de l'appel. Le conducteur peut également choisir de différer cette prise de ligne c'est-à-dire ne pas prendre la ligne tout de suite s'il le juge nécessaire. Ainsi, c'est le conducteur qui choisit l'instant de prise de ligne. Les moyens d'acceptation de l'appel sont par exemple constitués par le bouton poussoir 22 ou un sélecteur ou un dispositif de reconnaissance et de synthèse vocale 21 qui interprète alors directement un ordre de prendre la communication donnée oralement par le conducteur.

En variante, lorsqu'un appel est en cours (mais non encore pris par le conducteur), toute activation du dispositif de reconnaissance vocale provoque la prise de ligne automatique (uniquement si la mise en condition sécuritaire est achevée, bien sûr !). Ceci évite d'avoir à accepter l'appel et ensuite à activer le dispositif de synthèse vocale (ou l'inverse).

De manière classique, l'unité de téléphonie (figure 1) comporte un haut-parleur 15 destiné à diffuser les messages vers le conducteur ou à transmettre l'appel. Cette unité de téléphonie comporte également un microphone 16 permettant de répondre à l'appel sans avoir à prendre en main un combiné (dispositif «mains libres »). Le dispositif de reconnaissance et de synthèse vocale 21 gère notamment ce microphone 16 et ce haut-parieur 15 et émet les messages M1 et M2 respectivement vers l'appelant (par l'intermédiaire de l'unité centrale 19 et du dispositif 13) et vers le conducteur (par l'intermédiaire du haut-parleur 15).

En variante, lorsque le conducteur ne désire pas entendre le message M2 (qui peut être lassant, lorsqu'il est répété à chaque appel reçu), le bip sonore 24 informe le conducteur de l'achèvement de la mise en condition sécuritaire et de l'autorisation de la prise de ligne. En temps normal, lorsqu'un message M2 est émis vers le conducteur, le bip sonore 24 n'a pas d'utilité et peut être supprimé. En effet, dans ce cas, c'est la fin du message M2 qui indique directement au conducteur que la mise en condition sécuritaire est achevée.

On notera que la présence ou non d'un bip sonore est entièrement paramétrable, c'est le conducteur qui choisit d'utiliser un tel bip ou non. Il en est de même avec le clignotement de la lampe 20 dont tous les paramètres, fréquence, intensité, temps de clignotement, sont directement paramétrables en fonction du désir du conducteur.

Le procédé selon l'invention agit ainsi comme si une sorte de «secrétaire électronique » était placée entre l'appelant et l'appelé, de telle sorte que l'appelant sache qu'il est en communication avec un véhicule automobile et que l'appelé sache qu'il peut attendre le moment opportun pour prendre l'appel puisque l'appelant est informé de la situation. Le procédé selon l'invention permet donc de différer la prise d'un appel et de donner au conducteur appelé le choix, en toute quiétude et sécurité, de l'instant d'établissement de la communication.

L'utilisation, en outre, d'un système de reconnaissance vocale permet d'éviter toute manipulation au conducteur et a pour but de réduire le nombre d'accidents imputés à la composition d'un numéro.

Le procédé selon l'invention consiste ainsi à :
- a) détecter qu'une coopération fonctionnelle est constituée entre l'unité amovible (11) et le support fixe (12) dans le véhicule le cas échéant,
- b) prendre en compte une indication (14) représentative de l'état d'activation du véhicule, et dès réception d'un appel par l'unité de téléphonie alors que le véhicule est actif,
- c) activer des moyens (13, 19) de prise de ligne automatique,
- d) activer des moyens (19, 21) de transmission d'un message d'attente (M1) en direction de l'appelant,
- e) activer des moyens d'information (15, 20, 21, M2) du conducteur de la réception d'un appel, et
- f) autoriser (19) la prise de l'appel par le conducteur, lorsque celui ci a accepté (22) l'appel et uniquement si la mise en condition sécuritaire du conducteur est achevée.

L'ensemble de ces étapes est réalisé par le dispositif embarqué dans le véhicule automobile. En variante, les étapes constituées par :
- c) l'activation des moyens de prise de ligne automatique,
- d) l'activation des moyens de transmission d'un message d'attente M1,
- e) l'activation des moyens d'information du conducteur 15, 20, M2, et
- f) l'autorisation de la prise de l'appel par le conducteur, lorsque celui-ci l'a accepté et lorsque la mise en condition sécuritaire est achevée, peuvent être réalisées directement en tant que service du réseau téléphonique. Dans ce cas, bien entendu, le réseau téléphonique est informé par l'unité de téléphonie 10 du fait que l'unité de téléphonie est opérationnelle et que le véhicule est actif (étapes a et b).

La présente invention concerne également un dispositif mettant en oeuvre le procédé ci-dessus décrit.

Un tel dispositif comporte notamment :
- une unité de téléphonie disposée dans un véhicule automobile,
- des moyens de traitement (18) d'une indication (14) représentative de l'état d'activation du moteur,
le dit dispositif étant caractérisé en ce qu'il comporte en outre des moyens de mise en conditions sécuritaire constitués par la combinaison :
- de moyens (13,19) de prise de ligne automatique,
- de moyens (19, 21) de transmission d'un message d'attente M1 vers l'appelant,
- de moyens d'information (23, 15, 20, 21, M2, S) du conducteur de la réception d'un appel,
- de moyens d'acceptation (22) de l'appel par le conducteur, et
- de moyens d'autorisation (19) de la prise d'appel par le conducteur.

Bien entendu, la présente invention n'est pas limitée au mode de réalisation ci-dessus décrit et englobe toute variante à la portée de l'homme de l'art. Ainsi, les moyens d'acceptation de l'appel par le conducteur peuvent être de tout type. Il peut s'agir de bouton-poussoir 22, de sélecteur impulsionnel ou non ou d'organe de commande associé à par un système de reconnaissance vocale 21.

En variante, on notera que la mise en condition sécuritaire ne comprend pas forcément l'ensemble des actions S, 23, 20, M2, 24 et M1. Notamment, la mise en condition sécuritaire peut être constituée par le seul message M1 ou le clignotement de la lampe 20 associé au bip sonore 24 de fin de mise en condition. La mise en condition sécuritaire a cependant toujours pour but de repousser le moment de la prise de ligne par le conducteur jusqu'à ce que les conditions de sécurité nécessaires soient atteintes et que le conducteur décide de prendre la communication.

La présente invention concerne également une unité de téléphonie (intégrée ou non) mettant en oeuvre le procédé ci-dessus décrit.

## Revendications

1. Procédé de commande d'une unité de téléphonie (10) mise en place dans un véhicule automobile, le dit procédé consistant lorsque le véhicule est activé et qu'un appel téléphonique est reçu par l'unité de téléphonie en provenance d'un appelant à effectuer automatiquement une mise en condition sécuritaire du conducteur appelé dès réception d'un appel en réalisant les étapes suivantes :
-a) prise en compte d'une indication (14) représentative de l'état d'activation du véhicule dès réception d'un appel par l'unité de téléphonie alors que le véhicule est actif,
-b) activation des moyens (13, 19) de prise de ligne automatique,
-c) activation des moyens (19, 21) de transmission d'un message d'attente (M1) en direction de l'appelant,
-d) activation des moyens d'information non intrusifs (23, S, 15, 20, 21, M2) du conducteur de la réception d'un appel, et
-e) autorisation (19) de la prise de l'appel par le conducteur, lorsque celui ci a accepté (22) l'appel et uniquement si la mise en condition sécuritaire du conducteur est achevée,
le dit procédé étant **caractérisé en ce que** l'ensemble des étapes c) à e) est géré par un réseau téléphonique.

2. Procédé de commande selon la revendication 1, **caractérisé en ce que** le message d'attente M1 informe l'appelant que l'appelé se trouve dans un véhicule actif.

3. Procédé de commande selon la revendication 1, **caractérisé en ce que** dans le cas où l'unité de téléphonie est constituée d'une unité amovible (11) associée à un support fixe (12) disposé dans le véhicule le dit procédé comporte préalablement à l'étape a) une étape a') consistant à détecter qu'une coopération fonctionnelle est constituée entre l'unité amovible (11) et le support fixe (12) dans le véhicule.

4. Dispositif de commande d'une unité de téléphonie mettant en oeuvre le procédé selon l'une quelconque des revendications 1 à 3, le dit dispositif étant du type comportant :
a) - une unité de téléphonie (10) disposée dans un véhicule automobile,
b) - des moyens de traitement (18) d'une indication (14) représentative de l'état de fonctionnement du moteur,
c) - des moyens (13,19) de prise de ligne automatique,
d) - des moyens (19, 21) de transmission d'un message d'attente M1 vers l'appelant,
e) - des moyens d'information non intrusifs (23, S,15, 20, 21, M2) du conducteur de la réception d'un appel,
f) - des moyens d'acceptation (22) de l'appel par le conducteur, et
g) - des moyens d'autorisation (19) de la prise d'appel par le conducteur, uniquement si la mise en condition sécuritaire est achevée,
le dit dispositif étant **caractérisé** en ce les moyens d), e), et g) sont commandés par un réseau téléphonique.

5. Dispositif selon la revendication 4, **caractérisé en ce que** les moyens d'acceptation (22) de l'appel par le conducteur sont constitués par un système de reconnaissance vocale.

6. Dispositif selon la revendication 4, **caractérisé en ce que** les moyens d'acceptation (22) de l'appel par le conducteur sont activés par appui sur une touche spécifique.

7. Unité de téléphonie comprenant des moyens de mise en oeuvre du procédé de commande selon l'une quelconque des revendications 1 à 3.

## Patentansprüche

1. Verfahren zum Steuern einer in einem Kraftfahrzeug installierten Telefoneinheit (10), welches Verfahren darin besteht, dass bei aktiviertem Fahrzeug und Empfang eines von einem Anrufer kommenden telefonischen Anrufes durch die Telefoneinheit automatisch ein Sicherheitszustand des angerufenen Fahrers ab Empfang eines Anrufs durch die folgenden Schritte herbeigeführt wird:
- a) Berücksichtigung einer Anzeige(14), die den Aktivitätszustand des Fahrzeuges ab Empfang eines Anrufes durch die Telefoneinheit bei aktiviertem Fahrzeug darstellt,
- b) Aktivierung von Mitteln (13, 19) zur automatischen Leitungsübernahme,
- c) Aktivierung von Mitteln (19, 21) zum Übertragen einer Wartebotschaft (M1) in Richtung an den Anrufer,
- d) Aktivierung von nicht störenden Mitteln (23, S, 15, 20, 21, M2) zum Informieren des Fahrers über den Empfang eines Anrufes, und
- e) Autorisierung (19) zur Anrufannahme durch den Fahrer, wenn dieser den Anruf akzeptiert hat (22), und nur dann, wenn der Sicherheitszustand des Fahrers erreicht ist,
wobei dieses Verfahren **dadurch gekennzeichnet ist, dass** die Gesamtheit der Schritte c) bis e) von einem Telefonnetz durchgeführt wird.

2. Verfahren nach Anspruch 1, **dadurch gekennzeichnet, dass** die Wartebotschaft M1 den Anrufer darüber informiert, dass der Angerufene sich in einem aktivierten Fahrzeug befindet.

3. Verfahren nach Anspruch 1, **dadurch gekennzeichnet, dass** für den Fall, dass die Telefoneinheit von einer mobilen Einheit (11) gebildet wird, die einem im Fahrzeug angeordneten ortsfesten Träger (12) zugeordnet ist, das Verfahren vor dem Schritt a) einen Schritt a') umfasst, der darin besteht, festzustellen, ob eine Funktionsverbindung zwischen der mobilen Einheit (11) und dem ortsfesten Träger (12) im Fahrzeug zustande gekommen ist.

4. Vorrichtung zum Steuern einer Telefoneinheit, die das Verfahren gemäß einem der Ansprüche 1 bis 3 durchführt, wobei die Vorrichtung aufweist:
a) eine Telefoneinheit (10), die in einem Kraftfahrzeug angeordnet ist.
b) Mittel (18) zum Verarbeiten einer Anzeige (14), die den Betriebszustand des Motors darstellt,
c) Mittel (13, 19) zur automatischen Leitungsübernahme,
d) Mittel (19,21) zum Übertragen einer Wartebotschaft M1 an den Anrufer,
e) Nicht störende Mittel (23, S, 15, 20, 21, M2) zum Informieren des Fahrers über den Empfang eines Anrufes,
f) Mittel (22) zum Akzeptieren des Anrufes durch den Fahrer, und
g) Mittel (19) zum Autorisieren der Anrufannahme durch den Fahrer nur dann, wenn der Sicherheitszustand erreicht ist,
wobei die Vorrichtung **dadurch gekennzeichnet ist, dass** die Mittel d), e) und g) durch ein Telefonnetz gesteuert sind.

5. Vorrichtung nach Anspruch 1, **dadurch gekennzeichnet, dass** die Mittel (22) zum Akzeptieren des Anrufes durch den Fahrer von einem akustischen Erkennungssystem gebildet werden.

6. Vorrichtung nach Anspruch 4, **dadurch gekennzeichnet, dass** die Mittel (22) zum Akzeptieren des Anrufes durch den Fahrer durch Berühren eines speziellen Tasters aktiviert werden.

7. Telefoneinheit mit Mitteln zum Durchführen des Verfahrens nach einem der Ansprüche 1 bis 3.

## Claims

1. Command procedure for a telephone unit (10) placed in a motor vehicle, said procedure consisting, when the vehicle is activated and a telephone call is received by the telephone unit from a caller, of the automatic establishment of safe conditions for the driver called upon reception of a call by carrying out the following stages:
a) consideration of a signal (14) representing the vehicle activation state when a call is received by the telephone unit when the vehicle is active,
b) activation of the automatic call answering means (13, 19),
c) activation of the means (19, 21) for transmitting a holding message (M1) to the caller,
d) activation of the non-intrusive means (23, S, 15, 20, 21, M2) of notifying the driver of the incoming call, and
e) authorisation (19) for the driver to answer the call, if he has accepted (22) the call and only if safe conditions for the driver have been established,
said procedure being **characterised in that** the stages c) to e) together are handled by a telephone network.

2. Command procedure according to Claim 1, **characterised in that** the holding message M1 informs the caller that the called party is in an active vehicle.

3. Command procedure according to Claim 1, **characterised in that** if the telephone unit is a detachable unit (11) with a fixed holder (12) in the vehicle, said procedure includes a stage a') before stage a) to detect whether there is functional inter-working between the detachable unit (11) and the fixed holder (12) in the vehicle.

4. Command device of the telephone unit implementing the procedure according to any one of Claims 1 to 3, said device including:
a) a telephone unit (10) placed in the motor vehicle,
b) means to process (18) a signal (14) representing the engine activation state,
c) automatic call answering means (13, 19),
d) means (19, 21) for sending a holding message M1 to the caller,
e) non-intrusive means (23, S, 15, 20, 21, M2) of notifying the driver of the incoming call,
f) driver call acceptance means (22), and
g) means to authorise (19) the driver to answer the call, only if safe conditions have been established,
said device being **characterised in that** the means d), e) and g) are commanded by a telephone network.

5. Device according to Claim 4, **characterised in that** the driver call acceptance means (22) is a voice recognition system.

6. Device according to Claim 4, **characterised in that** the driver call acceptance means (22) is activated by pressing a specific button.

7. Telephone unit with the means of implementing the command procedure according to any one of Claims 1 to 3.
